# EUROPEAN PATENT APPLICATION

(11) **EP 3 226 124 A1**
(43) Date of publication of application: **04.10.2017**
(21) Application number: 17162618.7
(22) Date of filing: 23.03.2017
(51) Int. Cl.: G06F 9/44, H04M 1/725

(54) **CONTEXT ADAPTATION OF USER INTERFACE AND CONTENT**

(30) Priority: 31.03.2016 KR 20160039769
(71) Applicant: LSIS Co., Ltd., Gyeonggi-Do 14119 (KR)
(72) Inventor: LEE, Seok Chan, 14118 Gyeonggi-do (KR); LEE, Seung Ju, 14118 Gyeonggi-do (KR); YOON, Yeo Chang, 14118 Gyeonggi-do (KR); KONG, Shin Jo, 14118 Gyeonggi-do (KR); BAE, Ae Kyoung, 14118 Gyeonggi-do (KR); YUN, Jang Hyeok, 14118 Gyeonggi-do (KR); WHANG, Ho Young, 14118 Gyeonggi-do (KR)
(74) Representative: Zacco Sweden AB

(57) **Abstract**

The present disclosure includes a human machine interface (HMI) content server configured to control content information for a content provided to a display equipment; and a HMI configured to receive device information and user experience information transmitted from the display equipment and output an analysis result produced by analyzing the device information and the user experience information to the HMI content server to control the content information.

## Description

### CROSS-REFERENCE TO RELATED APPLICATIONS

This application claims priority under 35 U.S.C. 119 and 365 to Korean Patent Application No. , filed on in the Korean Intellectual Property Office, the disclosure of which is incorporated herein by reference.

### BACKGROUND

N-screen may be s service capable of using a content through a variety of equipment such TV, PC, smart phone, tablet and tablet PC.

Further, the N-screen may refer to a technology (or service) capable of 'continuously' enjoying a multimedia content using N equipments, wherein the N may also mean a network.

Human machine interface HMI may be an interface to connect an analog cognitive world of human that is related with visual and auditory senses to a digital machine world that processes computer or communication.

The HMI may normally perform search and control functions by manipulating a mouse or a keyboard in a desktop environment or using a display panel attached to a machine.

However, as a variety of infrastructures such as web and network environments is built and a variety of smart equipments is introduced so that a location restriction is released, there may be a demand to use HMI functions in the smart equipments.

The HMI content provided to smart equipments or display equipemnts may be provided by making data generated in machines or data for manipulating the machine into diagram.

A user may be provided with content from a HMI content provider using a smart equipment and a web browser.

The HMI content may obtain information from a machine and visualize it into a diagram or table type so as to be provided to the user.

When the smart equipment or display equipment is connected to the HMI content server, platform and browser that are information of the smart equipment or display equipment may be transmitted to the HMI content server.

The HMI content server may analyze the information transmitted from the smart equipment or display equipment, wherein it may identify the kind of equipment, maximum or minimum resolution of a screen, the kinds of platform and browser.

However, there is a fear that the HMI content server generates contents that do not support the smart equipment or display equipment to be provided thereto.

There may be two content providing methods, that is, one source multi device OSMD method and adaptive source multi device ASMD.

In case of the OSMD method, when a content does not support the smart equipment or display equipment, each equipment may not provide contents of the same quality.

In case of the ASMD method, when there is not an adaptation for machine, the content may not be provided.

### SUMMARY

It is an objective of the present disclosure to provide a HMI system and a method for providing information thereof, capable of reducing HMI content providing failures by applying a user experience UX to an N-screen technology and enabling a user to use the HMI content efficiently and conveniently through a content relocation.

According to an aspect of the present invention, there is provided a human machine interface (HMI) system, comprising a human machine interface (HMI) content server configured to control content information for a content provided to a display equipment; and a HMI configured to receive device information and user experience information transmitted from the display equipment and output an analysis result produced by analyzing the device information and the user experience information to the HMI content server to control the content information, wherein the HMI analyzes a use frequency of the content included in the user experience information and a using time of the content and output to the HMI content server the analysis result in which each module type for the content is set.

Preferably, the device information may include at least one of platform information, browser information and resolution information of the display equipment.

Preferably, the user experience information may include a usage history of the HIM content server in the device equipment, wherein the usage history of the HMI content server may include a use frequency of content and a using time of the content.

Preferably, the HMI may include a storage unit configured to store the device information and the user experience information; and a controller configured to output to the HMI content server the analysis result produced by analyzing the device information and the user experience information.

Preferably, the analysis result may further include a main frame size, a module size and a module location produced by analyzing the device information.

Preferably, the controller may establish whether each module type for the content is for search or control depending on the use frequency of the content and the using time of the content and outputs the established types to the HMI content server.

Preferably, the module type for search may be established according to the using time of the content, and the module type for control may be established according to the use frequency of the content.

Preferably, the HMI content server may control the content information to control the content, based on the analysis result including a main frame size, a module size and a module location of the content.

According to another aspect of the present invention, there is provided a method for operating an HMI system, comprising a) receiving device information and user experience information transmitted from a display equipment; b) analyzing the device information and the user experience information to generate an analysis result; and c) outputting the analysis result to an HMI content server to control content information for the content provided to the display equipment from an HMI content server, wherein the step b) includes analyzing a use frequency of content included in the user experience information and a using time of the content to generate the analysis result in which each module type for the content is set.

Preferably, the device information may include at least one of platform information, browser information and resolution information of the display equipment, wherein the step b) may include analyzing at least one of platform information, browser information and resolution information of the display equipment and generating the analyzed result for a main frame size, a module size and a module location of the content.

Preferably, the user experience information may include a usage history of the HIM content server in the device equipment, wherein the usage history of the HMI content server may include a use frequency of content and a using time of the content.

Preferably, the step b) may include analyzing the use frequency of the content and the using time of the content to generate the analyzed result used to established whether each module type for the content is for search or control.

Preferably, the module type for search may be established according to the using time of the content, and the module type for control is established according to the use frequency of the content.

The HMI system and method for operating the same according to the present disclosure may reflect device information and user experience information to content information so that a content providing failure may be effectively reduced when providing a display equipment with a content.

Further, it may be possible to use a content conveniently based on user experience information and by adjusting the content according to a user preference.

### BRIEF DESCRIPTION OF THE DRAWINGS

FIG. 1 may be a block diagram illustrating a HMI system for providing a HMI content by applying a user experience UX to an N-screen technology according to an embodiment of the present disclosure.
FIG. 2 may be a flowchart of a HMI system for providing a HMI content by applying a user experience UX to an N-screen technology according to an embodiment of the present disclosure.
FIG. 3 may be a flowchart of a HMI system illustrating a generation of content information provided to a display equipment in detail according to an embodiment of the present disclosure.

### DETAILED DESCRIPTION OF THE EMBODIMENTS

Hereinafter, the present disclosure related embodiments will be described in detail with reference to the accompanying drawings. Suffixes "module" and "portion" for components used in the description below are given or mixed in consideration of only easiness of making specification, and they do not have meanings or roles separated with one another in themselves.

Advantages and characteristics of the present disclosure, and methods for accomplishing them will be clear by referring to embodiments described below in detail together with the accompanying drawings. However, the present disclosure may not be restricted to embodiments disclosed below, but may be embodied in a variety of forms different with one another. The present embodiments are merely provided to complete the disclosure of the present disclosure and completely make those skilled in the art know the scope of the present disclosure. Also, the present disclosure may be defined only in the scope of claims and the same reference numerals throughout the specification refer to like elements.

In describing embodiments of the present disclosure, when it is determined that detail description of known functions or configurations make gist of the present disclosure unclear, its detailed description will be omitted. Further, terms described below are defined in consideration of functions in the embodiments of the present disclosure, which may be changed depending on intensions of a user and an operator, or practice. Therefore, its definition should be made based on the entire contents of the present specification.

Combinations of each block and each step in the accompanying drawings may be performed by computer program instructions. Since those computer program instructions may be mounted on a processor of a general purpose computer, a special purpose computer or another programmable data processing equipment, those instructions performed through a processor of the computer or other programmable data processing equipment may generate means to perform functions described in each block of the drawings or each step of the flowchart. Since those computer program instructions may also be stored in a computer usable or computer readable memory that is oriented to a computer or other programmable data processing equipment in order to embody the functions in a specific method, the instructions stored in the computer usable or computer readable memory may also produce a manufacturing item including an instruction means to perform a function described in each block and each step in a flowchart of the drawings. Since the computer program instructions may also be mounted on a computer or other programmable data processing equipment, a series of operational steps is performed on the computer or other programmable data processing equipment to generate computer executable processes so that the instructions to perfume the computer or other programmable data processing equipment may provide steps to execute functions described in each block and each step of the flowchart in the drawings.

Further, each block or each step indicates a portion of module, segment or code that includes one or more executable instructions to execute specific logical function(s). Also, it is noted that functions mentioned in the blocks or steps may be generated out of order in a several alternative embodiments. For example, continuously illustrated two blocks or steps may be concurrently performed substantially or the blocks or steps may sometimes be performed in reverse order according to their corresponding functions.

Hereinafter, a duplex management system according to an embodiment of the present disclosure will be described in detail with reference to the accompanying drawings.

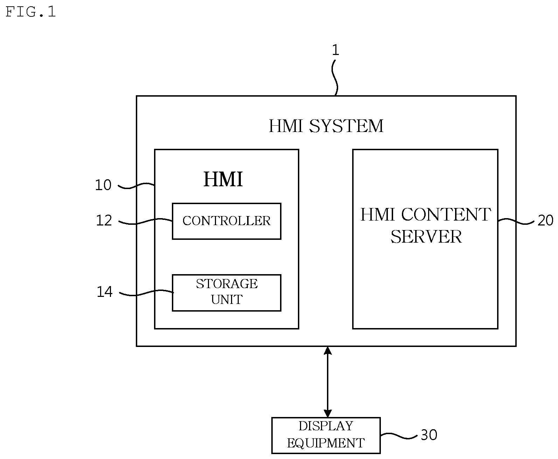

FIG. 1 may be a block diagram illustrating a HMI system for providing a HMI content by applying a user experience UX to an N-screen technology according to an embodiment of the present disclosure.

Referring to FIG. 1, a HMI system 1 may include a human machine interface HMI 10 and a HMI content server 20. Also, the HMI system 1 may be connected to a display equipment 30.

The HMI 10 may include a controller 12 and a storage unit 14.

The HMI system 1 may be connected to the display equipment 30 in a wired or wireless manner, and it may be connected in a wireless manner according to a preferred embodiment.

The display equipment 30 may be a device that provides a user with information through a display, and a smart equipment may be a preferred embodiment.

The HMI system 1 may make data generated in a machine and to manipulate the machine into a diagram or module through content to provide the data, and data of power system and power equipment may be provided according to a preferred embodiment.

The HMI 10 may receive data information of an equipment to provide a user with the data information through a screen, and store it therein.

The HMI content server 20 may store the data information of the equipment that the HMI 10 received.

The data information of the equipment may be stored in the HMI system 1. In detail, the data information of the equipment may be stored in each of the HMI content server 20 and the storage unit 14 of the HMI 10.

The display equipment 30 may be connected to the HMI system 1 to transmit and receive information. That is, the display equipment 30 may be connected to the HMI system 1 through a wireless online connection. On the other hand, the display equipment 30 may be connected to the HMI system 1 through a wired online connection.

The display equipment 30 may transmit device information and a user experience UX to the HMI system 1.

The HMI system 1 may receive the device information and user experience UX from the display equipment 30 to relocate a HMI 10 content interior module.

The device information may be resolution, manufacturer, model name, platform and browser of the device equipment.

The user experience UX may mean information identified by a user in the HMI system 1, and past information obtained using the HMI system 1 such as a time according to the information identified in the HMI system 1, when a user has an access to the HMI system 1.

The content may be kinds of information or their contents provided through Internet or computer communication, or a concept that totally refers to kinds of information or their contents formed by producing character, sign, voice, acoustic image and image in a digital format so as to be processed and distributed, in order to be used in wired and wireless electrical communication networks. That is, the content may be digital information provided through wired and wireless communication networks.

A relocation of the HMI 10 content internal module may mean to sort out digital information provided by the HMI system 1 according to the kind of information such as searchability and manipulability.

By the relocation of the HMI 10 content internal module, the HMI system 1 may solve a resolution problem of the HMI 10 content provided to the display equipment 30, and meet a use characteristic of a user by reflecting a user experience UX, so that there may be advantages of providing efficiency and convenience.

The HMI system 1 may receive device information from the display equipment 30 to control at least one of size of a main frame of the HMI 10 content to be provided to the display equipment 30, size of a module constituting the content, and resolution of the HMI 10 content to apply it to the display equipment 30.

Further, the HMI 10 system may receive a user experience UX from the display equipment 30 to establish a module type constituting the HMI 10 content.

For example, the user experience UX may be information that a user identified in the display equipment 30, an identified time of the information, etc.

Types of the module constituting the HMI 10 content may include a search module to search for data, and a control module to control a machine.

The search module may include data table, grid and dream view, and the control module may include button and check button.

When a module type is established, the HMI system 1 may control each type module location and provide the HMI 10 content to satisfy a user's convenience.

The HMI system 1 may include the HMI 10 and a HMI content server 20.

The HMI system 1 may provide status information indicating a status of a machine through the display equipment 30.

The machine may be a power equipment, for example, the status information may be power flow and power status used in the power equipment and a usage history of the equipment. This is an embodiment, which is not limited thereto.

The HMI 10 may receive device information of the display equipment 30 and user experience information that is a usage history of the display equipment 30 from the display equipment 30.

The HMI 10 may store the device information and the user experience information in the storage unit 14, perform general operations of the HMI 10 through the controller 12, and analyze the device information and the user experience information through a control of the controller 12.

The controller 12 may be a computer apparatus, a processing equipment, etc., operate by a user to analyze the device information and the user experience information. Also, the controller 12 may analyze device information and user experience information through a program that has been programed before.

The device information may be at least one of platform information, device browser information and device resolution information.

The user experience information may be past information that a user has used the HMI content server 20.

The HMI content server 20 may generate content information to be provided to the display equipment 30 when the HMI 10 combines the device information and the user experience information stored in the storage unit 14.

The HMI 10 may receive and analyze the device information, and control a size of a main frame provided to the display equipment 30 through the analysis.

The HMI 10 may receive and analyze the device information, and control a size of a module provided to the display equipment 30 through the analysis.

The HMI 10 may receive and analyze the device information, and control a size of a main frame provided to the display equipment 30 through the analysis and a size of a module at the same time.

The HMI 10 may identify a usage history stored in the storage unit 14 of the HMI content server 20 from the display equipment 30 by analyzing the user experience information.

Further, the HMI 10 may perform a relocation of the content module and control a size of the content module through a former display device, and store and analyze history of the relocation or control.

The HMI 10 may receive the usage history that a user has used the HMI content server 20 through the display equipment 30 as user experience information and analyze it.

The HMI 10 may establish a type of each module according to a content use frequency and a content using time among the usage history of the HMI content server 20.

The type of each module type established by the HMI 10 includes a search type and a control type, wherein the search type may be established according to the content use frequency and the control type may be established according to a using time.

That is, the HMI 10 may establish a content frequently used by a user from the HMI content server 30 as the search type, and the HMI 10 may establish a content as the control type according to a using time.

Further, the search module and control module may be disposed in a content by analyzing use frequency or using time.

For example, when a chart search module is used more frequently than other search modules by a user selection, the chart search module may be disposed in a search module location.

Specifically, the HMI 10 may receive device information from the display equipment 30, and analyze device platform information included in the device information, device browser information and device resolution information.

When at least one of the device platform information, the device browser information, and the device resolution information is completely analyzed, the HMI 10 may control a main frame size of the content to be provided to the display equipment 30 based on at least one of the device platform information, the device browser information, and the device resolution information.

Further, when at least one of the device platform information, the device browser information, and the device resolution information is completely analyzed, the HMI 10 may control a module size of the content to be provided to the display equipment 30 based on at least one of the device platform information, the device browser information, and the device resolution information.

The main frame size control and the module size control may be simultaneously performed. On the other hand, the module size may be controlled after controlling the main frame size.

When the display equipment 30 is connected to the HMI system 1, the HMI 10 may receive from the display equipment 30 a usage history that the display equipment 30 has used the HMI content server 20.

That is, a user may connect to the HMI system 1 using the display equipment 30 to receive a content search record from the HMI content server 20 as a usage history according to a content use frequency and a content using time.

The HMI 10 may configure a search content used by a user to search for data generated in a machine through the HMI 10 server according to a content using time and a control content used by a user to control a machine through the HMI 10 server according to a content use frequency.

That is, the search content may be used to search for data of a machine in the HMI 10 server based on a content using time and the control content may be used to control a machine in the HMI 10 server based on a content use frequency.

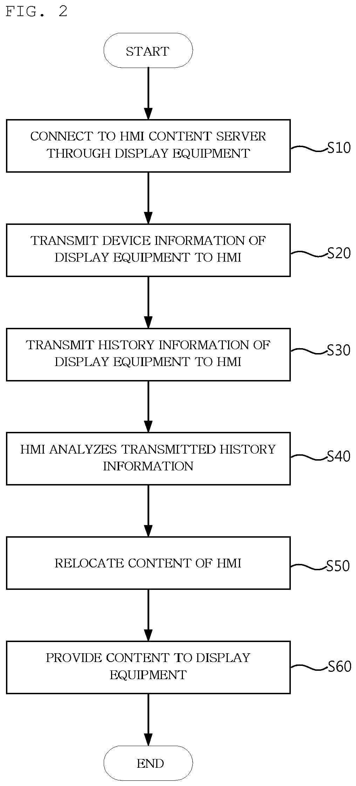

FIG. 2 may be a flowchart of a HMI system 1 for providing a HMI 10 content by applying a user experience UX to an N-screen technology.

Referring to FIGS. 1 and 2, a user may connect to the HMI content server 20 of the HMI system 1 through the display equipment 30 (S10).

When the display equipment 30 is connected to the HMI system 1, device information of the display equipment 30 may be transmitted to the HMI 10 (S20).

That is, the HMI 10 may understand a user pattern due to a display equipment 30 connection and bring history information (S30).

The HMI 10 may analyze the transmitted device information and history information that is transmitted user experience information (S40).

The HMI 10 may relocate a HMI 10 content by adjusting an existing HMI 10 content for a user convenience based on the transmitted device information and the user experience information (S50).

When the content relocation of the HMI content server 20 is completed, the content may be transmitted to the display equipment 30 (S60).

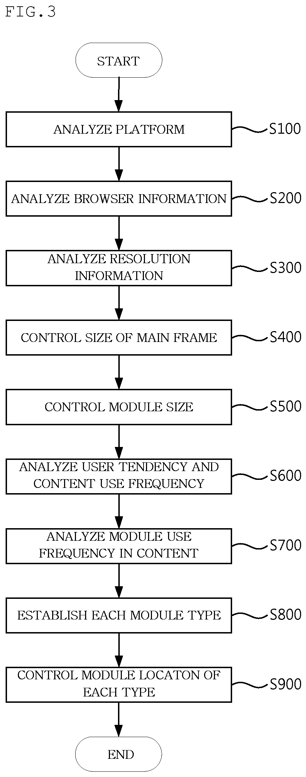

FIG. 3 may be a flowchart of a HMI system 1 illustrating a generation of content information provided to a display equipment 30 in detail.

Referring to FIGS. 1 to 3, the HMI system 1 may receive from the display equipment 30 the device information and the user experience information, and analyze platform information included in the device information, browser information included in the device information, and resolution information included in the device information (S100 to S300).

The HMI system 1 may control a size of a main frame of content information provided to the display equipment 30 through at least one of platform information of the display equipment 30 that is device information, browser information of the display equipment 30, and resolution information of the display equipment 30 (S400).

Further, the HMI system 1 may control a module size of content information provided to the display equipment 30 through at least one of platform information of the display equipment 30 that is device information, browser information of the display equipment 30, and resolution information of the display equipment 30 (S500).

The HMI system 1 may analyze the transmitted user experience information to analyze a user tendency to use the HMI content server 20. That is, a user may connect to the HMI content server 20 through the display equipment 30 to analyze a content use frequency, a content using time or a content module use frequency (S600 to S700).

That is, the HMI system 1 may analyze user experience information to understand a usage history to use the HMI content server 20 through the display equipment 30.

The HMI system 1 may establish each module type of content information based on an analysis of the usage history, wherein each module type may be search module and control module (S800).

The search module may be a type corresponding to a content using time of the HMI content server 20 through the display equipment 30. Specifically, the search module may be a time while a user may connect to the HMI content server 20 through the display equipment 30 and use the server.

The control module may be a type corresponding to a content use frequency of the HMI content server 20 through the display equipment 30. Specifically, the control module may be the number of using a module that a user may frequently uses when connecting to the HMI content server 20 through the display equipment 30 and using the server.

That is, the HMI system 1 may control a main frame size and a module size of content information provided to the display equipment 30 through device information of the display equipment 30, and a module location of each type so that a user may use it conveniently through user experience information, thereby enhancing its convenience.

According to an embodiment of the present disclosure, the above-described method may be embodied in a program recorded medium as codes read by a processor. The medium read by a processor may be ROM, RAM, CD-ROM, magnetic tape, floppy disc, optical data storage, for example, which also includes a form embodied with a carrier wave (a transmission over Internet, for example).

The above-described embodiments are not restrictively applied to the configuration and method described, but all or a portion of each embodiment may be selectively combined so as to perform a variety of modifications.

Further, while preferred embodiments of the present disclosure are described above, the present disclosure is not restricted to the specific embodiments. Also, it will be clearly understood by those skilled in the art that various modified embodiments not illustrated above are possible without departing basic sprits of the present disclosure claimed in the claims, and such modified embodiments should not be understood separately from technical ideas or prospects of the present disclosure.

## Claims

1. A human machine interface (HMI) system, comprising:
a human machine interface (HMI) content server configured to control content information for a content provided to a display equipment; and
a HMI configured to receive device information and user experience information transmitted from the display equipment and output an analysis result produced by analyzing the device information and the user experience information to the HMI content server to control the content information,
wherein the HMI analyzes a use frequency of the content included in the user experience information and a using time of the content and output to the HMI content server the analysis result in which each module type for the content is set.

2. The HMI system of claim 1, wherein the device information includes at least one of platform information, browser information and resolution information of the display equipment.

3. The HMI system of claim 1, wherein the user experience information includes a usage history of the HIM content server in the device equipment,
wherein the usage history of the HMI content server includes a use frequency of content and a using time of the content.

4. The HMI system of claim 1, wherein the HMI includes:
a storage unit configured to store the device information and the user experience information; and
a controller configured to output to the HMI content server the analysis result produced by analyzing the device information and the user experience information.

5. The HMI system of claim 4, wherein the analysis result further includes a main frame size, a module size and a module location produced by analyzing the device information.

6. The HMI system of claim 4, wherein the controller establishes whether each module type for the content is for search or control depending on the use frequency of the content and the using time of the content and outputs the established types to the HMI content server.

7. The HMI system of claim 6, wherein the module type for search is established according to the using time of the content, and the module type for control is established according to the use frequency of the content.

8. The HMI system of claim 1, wherein the HMI content server controls the content information to control the content, based on the analysis result including a main frame size, a module size and a module location of the content.

9. A method for operating an HMI system, comprising:
a) receiving device information and user experience information transmitted from a display equipment;
b) analyzing the device information and the user experience information to generate an analysis result; and
c) outputting the analysis result to an HMI content server to control content information for the content provided to the display equipment from an HMI content server,
wherein the step b) includes analyzing a use frequency of content included in the user experience information and a using time of the content to generate the analysis result in which each module type for the content is set.

10. The method for operating an HMI system of claim 9, wherein the device information includes at least one of platform information, browser information and resolution information of the display equipment,
wherein the step b) includes analyzing at least one of platform information, browser information and resolution information of the display equipment and generating the analyzed result for a main frame size, a module size and a module location of the content.

11. The method for operating an HMI system of claim 9, wherein the user experience information includes a usage history of the HIM content server in the device equipment,
wherein the usage history of the HMI content server includes a use frequency of content and a using time of the content.

12. The method for operating an HMI system of claim 11, wherein the step b) includes analyzing the use frequency of the content and the using time of the content to generate the analyzed result used to established whether each module type for the content is for search or control.

13. The method for operating an HMI system of claim 12, wherein the module type for search is established according to the using time of the content, and the module type for control is established according to the use frequency of the content.
